Europäisches Patentamt

European Patent Office

Office européen des brevets

(11) Numéro de publication : **0 639 020 A1**

(19)

## (12) DEMANDE DE BREVET EUROPEEN

(21) Numéro de dépôt : **94401827.4**

(22) Date de dépôt : **08.08.94**

(51) Int. Cl.⁶ : **H04M 11/08**

(30) Priorité : **10.08.93 FR 9309818**

(43) Date de publication de la demande :
**15.02.95 Bulletin 95/07**

(84) Etats contractants désignés :
**DE GB**

(71) Demandeur : **FRANCE TELECOM
Etablissement autonome de droit public,
6, Place d'Alleray
F-75015 Paris (FR)**

(72) Inventeur : **Krayem-Nevoux, Rola
1, rue de Montmorency
F-78990 Elancourt (FR)**

(74) Mandataire : **Signore, Robert et al
c/o SOCIETE DE PROTECTION DES
INVENTIONS
25, rue de Ponthieu
F-75008 Paris (FR)**

(54) **Ensemble terminal-modules d'acces pour installation de telecommunications.**

(57)    Le terminal (PA) contient des moyens (DIPA) pour dialoguer avec un module d'accès et des moyens (ME) pour établir une intercommunication avec au moins un réseau de télécommunications (RT). Chaque module d'accès comprend des moyens d'authentification (AUMA1, AUMA2) et des moyens (DIMA) pour dialoguer avec le terminal. Les fonctions spécifiques aux applications sont déportées dans les modules d'accès, le terminal ne remplissant que des fonctions de base commune à toutes les applications.

Application en télécommunications.

FIG. 1

## Domaine technique

La présente invention a pour objet un ensemble terminal-modules d'accès pour installation de télécommunications. Une telle installation peut être, par exemple, un réseau de radiocommunication, un réseau bancaire, un réseau téléphonique.

L'invention trouve une application dans les domaines multiapplications, par exemple pour cartes PASTEL (Marque déposée), Télécartes, cartes bancaires, carte SIM ("Subscriber Identity Module" pour "module d'identité d'abonné"). Par la suite, on parlera de modules d'accès pour désigner le dispositif de l'usager permettant d'accèder à une application donnée.

L'invention trouve une application particulière dans le système numérique de communications avec les mobiles fonctionnant dans la bande de 900 MHz, appelé encore "Global System for Mobile Communication" ou GSM.

Elle trouve aussi une application dans les réseaux de communications filaires.

L'invention trouve encore une application dans la mise à niveau des terminaux RNIS (Réseau Numérique à Intégration de Services), qui ont une interface carte pour les rendre plus indépendants vis-à-vis des compléments de service RNIS.

## Etat de la technique

En général, dans les systèmes de télécommunications multiaplications, un terminal contient les modules correspondants aux applications supportées ("applicatifs"). L'ajout d'une application nécessite d'introduire dans le terminal le module applicatif correspondant.

Il existe également des terminaux téléchargeables. Ainsi, selon le type d'applications envisagé, le terminal est téléchargé avec le module applicatif correspondant. Cette solution implique une liaison entre le terminal et le réseau qui soit suffisamment fiable. De plus, elle implique un délai de téléchargement.

Il existe des dispositifs de téléchargement qui prévoient de télécharger les logiciels de terminaux de télécommunications munis d'un microprocesseur à partir de leur interface lecteur de carte à puce. C'est ce qui est décrit par exemple dans le document EP-A-0 459 344. Cette technique permet un changement fréquent, d'un logiciel de fonctionnement à un autre, sans délai gênant pour l'usager. Cette solution ne résout pas le cas d'un terminal multiapplications. En effet, pour ce type de terminaux, chaque application supportée aurait un logiciel spécifique. L'ajout de nouveaux types d'applications impliquerait le téléchargement, dans le terminal, du logiciel applicatif correspondant.

La présente invention a justement pour but de remédier à ces inconvénients.

## Exposé de l'invention

A cette fin, l'invention propose un ensemble terminal-modules d'accès dans lequel toutes les opérations applicatives, qui sont, à ce jour, contenues dans le terminal, sont déportées dans les modules d'accès. Le terminal devient alors un lecteur avec un noyau de commandes commun aux multiples applications.

Un module d'accès peut ainsi accèder à une gamme plus étendue de terminaux, ces terminaux pouvant appartenir à différentes installations de telécommunication, et les terminaux peuvent accepter une plus grande variété d'applications. L'ajout de nouveaux types d'applications s'en trouve facilité.

De façon précise, la présente invention a pour objet un ensemble terminal-modules d'accès pour installation de télécommunications, chaque module d'accès pouvant être connecté à un terminal pour l'établissement d'une communication à travers un réseau de télécommunications pour une application parmi différentes applications,

- chaque terminal comprenant au moins :
  - des moyens pour dialoguer avec le module d'accès qui lui est connecté,
  - des moyens pour établir une intercommunication avec au moins un réseau de télécommunications,
  - des moyens pour dialoguer avec un utilisateur,
- chaque module d'accès comprenant au moins :
  - des moyens d'authentification,
  - des moyens pour dialoguer avec le terminal auquel il est connecté,

cet ensemble étant caractérisé par le fait que chaque module d'accès contient, dans ses moyens d'authentification, une mémoire contenant une logique propre à une application, le dialogue terminal-module d'accès s'effectuant toujours à travers les mêmes moyens de dialogue du terminal et du module d'accès, quelle que soit l'application.

Les fonctions spécifiques aux applications sont ainsi déportées et remplies dans les modules d'accès, le terminal ne remplissant que des fonctions de bases communes à toutes les applications.

De préférence, la mémoire de chaque module d'accès est protégée contre l'écriture intempestive directe de données qui viendraient de l'extérieur. La mémoire peut être du type EEPROM.

Chaque terminal peut comprendre des moyens pour dialoguer simultanément avec plusieurs modules d'accès.

Dans une variante avantageuse, chaque module d'accès est logé dans une carte de type ISO standard. Les moyens d'établissement d'intercommunication du terminal comprennent alors un lecteur pour la lecture d'une telle carte.

## Brève description des dessins

- la figure 1 représente un exemple de mise en oeuvre de l'invention dans un réseau de télécommunications,
- la figure 2 illustre une mise en oeuvre dans une architecture GSM.

## Exposé détaillé de modes de réalisation

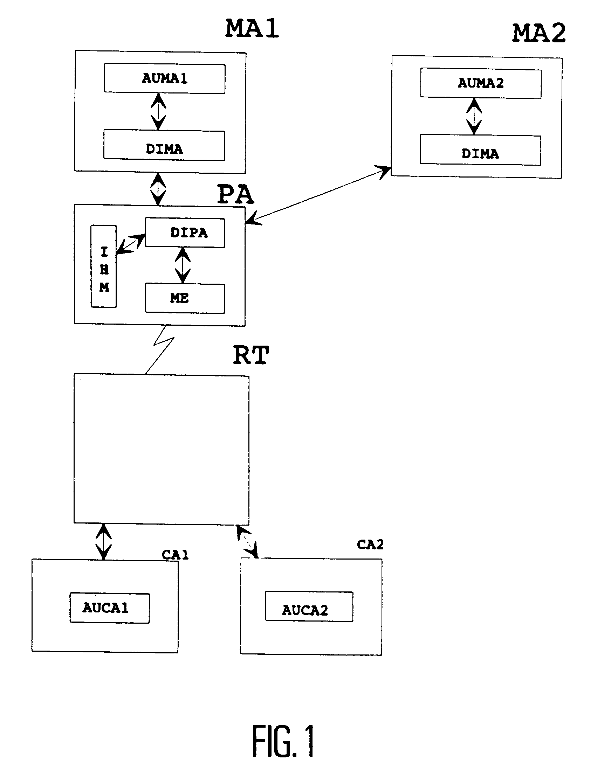

La figure 1 montre un ensemble selon l'invention relié à un réseau de télécommunications RT lequel est relié à deux centres d'autorisation $CA_1$ et $CA_2$ comprenant chacun des moyens d'authentification $AUCA_1$ et $AUCA_2$.

Le terminal, qui sera appelé, dans cette application, "poste autonome" et sera référencé PA, comprend :
- des moyens DIPA pour dialoguer avec le module d'accès qui lui est connecté,
- des moyens ME pour établir une intercommunication avec le réseau de télécommunications RT,
- des moyens IHM pour dialoguer avec un utilisateur.

Dans l'installation représentée, on voit, en outre, deux modules d'accès MA1, MA2. Chaque module d'accès comprend :
- des moyens d'authentification respectivement AUMA1, AUMA2,
- des moyens DIMA pour dialoguer avec le terminal auquel il est connecté.

Chaque moyen d'authentification AUMA1, AUMA2 contient une mémoire comprenant la logique applicative (données, traitement, protocoles).

Chaque module d'accès peut être logé dans une carte de type ISO standard. Les moyens d'établissement d'intercommunication électriques ME du poste PA comprennent alors un lecteur pour une telle carte.

Le principe de fonctionnement de cette installation est le suivant:

Le poste autonome PA est muni de moyens de dialogue avec tous les modules d'accès, qui représentent un noyau commun à tous les modules d'accès conformes à la norme ISO.

La logique applicative et les traitements correspondants sont inclus dans les modules d'accès. Ce sont les moyens d'authentification AUMA1 et AUMA2 qui supportent ces traitements et qui communiquent avec les premiers moyens d'authentification AUCA1, AUCA2 du centre d'autorisation.

Deux modules d'accès MA1 et MA2 de types différents auront des moyens d'authentification AUMA1 et AUMA2 différents mais des moyens de dialogue avec le poste autonome DIMA communs. Le poste autonome PA peut accepter ces deux types. Par contre, les moyens d'authentification AUMA1 du module d'accès MA1 communiquent avec les moyens d'authentification AUCA1 et les seconds moyens d'authentification AUMA2 communiquent avec les premiers moyens d'authentification AUCA2.

Cette approche peut être généralisée à n types de modules d'accès, n étant un entier quelconque.

On décrit ci-dessous un exemple de modèle de l'interface selon l'invention.

## Interface AUMA1-AUMA2

- DEMANDE-APPLICATION (Paramètres)
  Cette primitive permet à un module d'accès de demander l'accès à une application donnée.
- REPONSE-APPLICATION (Paramètres)
  Cette primitive permet à une application (ou à un centre d'autorisation) d'autoriser ou non l'accès à un module utilisateur.
- DEMANDE-AUTHENTIFICATION (Paramètres)
  Cette primitive permet à un centre d'autorisation (respectivement à un module d'accès) de demander une authentification de la part du module d'accès (respectivement du centre d'autorisation).
- REPONSE-AUTHENTIFICATION (Paramètres)
  Cette primitive permet à un centre d'autorisation (respectivement à un module d'accès) de fournir le résultat d'une authentification du module d'accès (respectivement d'un centre d'autorisation).

## Interface DIMA-DIPA

- ENVOIE-CA (Paramètres)

Cette primitive permet à un module d'accès d'envoyer des données vers un centre d'autorisation. Les données sont des primitives fournies par le module AUMA.
- RECOIT-CA (Paramètres)

Cette primitive permet à un module d'accès de recevoir des données d'un centre d'autorisation. Les données sont des primitives fournies au module AUCA.
- ENVOIE-MA (Paramètres)

Cette primitive permet au monde extérieur (centre d'autorisation-poste autonome ou réseau de télécommunications) d'envoyer des données vers un module d'accès.
- RECOIT-MA (Paramètres)

Cette primitive permet au monde extérieur (centre d'autorisation-poste autonome ou réseau de télécommunications) de recevoir les données d'un module d'accès.

La structure représentée sur la figure 1 n'est qu'un exemple. Dans d'autres cas, un même centre d'autorisation pourrait supporter à la fois les moyens d'authentification AUCA1 et AUCA2. De même, un poste autonome pourrait supporter plusieurs modules d'échange ME, par exemple un module d'échange avec le réseau téléphonique commuté et un module d'échange avec un réseau GSM.

Une installation GSM est décrit dans la revue "L'écho des Recherches", N°131, 1er trimestre 1988, pages 5 à 16 par B. GHILLEBART, P. COMBESCURE, A. MALOBERTI ; ainsi que dans le N°139 du 1er trimestre 1990, pages 13 à 19 par P. JOLIE et G. MAZZIOTTO de la même revue.

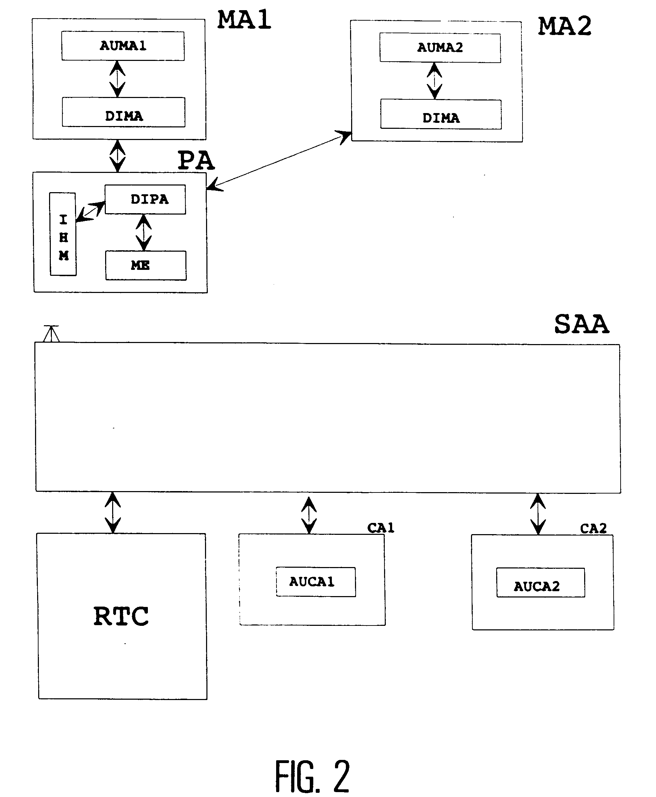

L'installation représentée sur la figure 2 comprend un réseau de télécommunications avec :
- un système d'accès SAA avec une station de base permettant d'établir l'intercommunication radio avec le poste autonome,
   - un ou des centres d'autorisation AUCA1, AUCA2,
   - un réseau téléphonique commuté RTC.

L'installation comprend encore un poste autonome PA, qui est un équipement mobile conforme à l'interface radio GSM. Il exécute les directives des modules d'accès MA1, MA2 et du réseau.

Les interactions homme/machine transitent par l'équipement mobile qui les soumet au module d'accès. Ce dernier les analyse et décide de les acheminer ou pas vers le réseau ou le centre d'autorisation.

En considérant la procédure d'établissement d'appel du GSM, on peut la décomposer en deux parties :
   - une procédure d'autorisation d'accès qui a lieu logiquement entre le module d'accès et un centre d'autorisation,
   - une procédure d'établissement de connexion qui a lieu entre l'équipement mobile (ou le poste autonome PA) et le système d'accès (ou le SAA).

L'homme du métier pourra se reporter aux documents établissant des normes sur la procédure d'établissement, notamment à :
   - GSM 11.11 : "Specifications of the SIM-ME Interface", ETSI PT12, Avril 1992, Version 4.2.0,
   - GSM 04.08 : "Mobile radio interface layer 3 Specification", ETSI PT12, Phase 2, Version 4.3.0, Février 1993.

Le tableau en fin de description donne, à titre d'exemple, les divers échanges entre le module d'accès MA, le poste autonome PA, le système d'accès SAA et le centre d'autorisation.

Si le module d'accès MA1 est un SIM (Subscriber Identification Module), la structure générale décrite ne change pas. Seuls les paramètres spécifient qu'il s'agit d'un SIM.

En effet, dans DEMANDE-APPLICATION, il faut spécifier que le type d'application est un SIM et donner l'information pour permettre au système d'accès de trouver le centre d'autorisation.

D'un autre côté, dans DEMANDE-AUTHENTIFICATION, il est fourni un nombre aléatoire (RAND) et un numéro de clé de chiffrement. Alors que dans REPONSE-AUTHENTIFICATION, le SIM fournit un résultat de calcul (SRES).

La mise en oeuvre de l'invention dans le SIM nécessite la modification du masque de ce module ; ce module d'abonné est décrit par la recommandation GSM 11.11 définie plus haut. Il ne contiendra que les données applicatives "personnelles" ; toutes les données "réseaux" doivent être liées au poste mobile et non pas au module d'abonné. En outre, le module doit supporter une interface DIMA permettant de dialoguer avec le poste autonome.

Enfin, le SIM a l'initiative des opérations et ne se contente pas de répondre aux sollicitations du "monde extérieur" (équipement mobile ou centre d'autorisation).

4

Si le module d'accès est du type carte PASTEL, le centre d'autorisation est un PCS-PASTEL.

Dans DEMANDE-APPLICATION, la carte spécifie qu'il s'agit d'une application PASTEL et fournit le numéro du serveur.

Dans REPONSE-AUTHENTIFICATION, la carte fournit son numéro ainsi que le code correspondant.

L'invention peut encore s'appliquer à la gestion des compléments de service RNIS.

Dans la recommandation Q.932 du CCITT, deux modes de fonctionnement sont définis en relation avec les procédures de commande de compléments de service : "le mode fonctionnel" et "le mode stimulus". Le mode fonctionnel est ergonomique mais peu évolutif. Le mode stimulus est présenté comme peu ergonomique mais ne nécessitant pas de traitement complexe. Il consiste en une simplification extrême de la couche application : le terminal se contente de transmettre vers le réseau le codage des touches manipulées par l'usager et afficher les informations en provenance du réseau. Toute l'intelligence est dans le réseau.

La présente invention apporte une solution à la gestion des compléments de service pour les terminaux RNIS à cartes. La couche application se trouve déportée vers la carte. La carte contient les scripts des compléments de services (module AUMA).

| MA | PA | SAA | CA |
|---|---|---|---|

ENVOIE-CA
DEMANDE
APPLICATION
(Paramètres)

Etablissement canal
logique
Demande de service
de signalisation :
(CM-SERVICE-REQUEST
ENVOIE-LA
DEMANDE APPLICATION
(..))

ENVOIE-CA
DEMANDE
D'APPLICATION (..))

RECOIT-MA
DEMANDE
APPLICATION (..))
ENVOIE-MA
DEMANDE
AUTHENTIFICATION
(...))

RECOIT-CA
(DEMANDE
AUTHENTIFICATION
(..))
ENVOIE-CA
(REPONSE
AUTHENTIFICATION
(..))

RECOIT-MA
REPONSE
AUTHENTIFICATION
(...))

ENVOIE-MA
REPONSE
APPLICATION
(...))

ENVOIE-MA
(REPONSE
APPLICATION (..))

ENVOIE-MA
(REPONSE APPLICATION
(..))

RECOIT-CA
(REPONSE
APPLICATION(..))

Demande d'établissement
d'appel

Etablissement canal de
trafic

**Revendications**

1. Ensemble terminal-modules d'accès pour installation de télécommunications, chaque module d'accès pouvant être connecté à un terminal pour l'établissement d'une communication à travers au moins un réseau de télécommunications pour une application parmi différentes applications,
   - chaque terminal (PA) comprenant au moins :
     - les moyens (DIPA) pour dialoguer avec le module d'accès qui lui est connecté,
     - des moyens (ME) pour établir une intercommunication avec au moins un réseau de télécommunications,
     - des moyens (IHM) pour dialoguer avec un utilisateur,
   - chaque module d'accès (MA1, MA2) comprenant au moins :
     - des moyens d'authentification (AUMA1, AUMA2),
     - des moyens (DIMA) pour dialoguer avec le terminal auquel il est connecté,
   cet ensemble étant caractérisé par le fait que chaque module d'accès (MA1, MA2) contient, dans ses moyens d'authentification (AUMA1, AUMA2), une mémoire contenant une logique propre à une application, le dialogue terminal-module d'accès s'effectuant toujours à travers les mêmes moyens de dialogue du terminal (DIPA) et du module d'accès (DIMA), quelle que soit l'application.

2. Ensemble selon la revendication 1, caractérisé par le fait que la mémoire de chaque module d'accès (MA1, MA2) est protégée contre l'écriture intempestive directe de données venant de l'extérieur.

3. Ensemble selon la revendication 1, caractérisé par le fait que chaque terminal (PA) comprend des moyens pour dialoguer simultanément avec plusieurs modules d'accès ( MA ).

4. Ensemble selon la revendication 2, caractérisé par le fait que la memoire est du type EEPROM.

5. Ensemble selon l'une quelconque des revendications 1 à 3, caractérisé par le fait que le module d'accès (MA1, MA2) est logé dans une carte de type ISO standard et par le fait que les moyens d'établissement d'intercommunication (ME) du terminal (PA) comprennent un lecteur pour la lecture de ladite carte.

6. Ensemble selon l'une quelconque des revendications 1 à 5 caractérisé par le fait que chaque module d'accès (MA1, MA2) comprend un interface mécanique propre à introduire le module dans les moyens d'établissement d'intercommunication (ME) du terminal (PA).

7. Ensemble selon l'une quelconque des revendica tions 1 à 5, caractérisé par le fait que l'intercommunication entre le terminal (PA) et le réseau de télécommunication (RT) est radioélectrique ou filaire.

8. Ensemble selon l'une quelconque des revendications 1 à 6, caractérisé par le fait que le terminal (PA) est mobile ou fixe, personnel ou public.

9. Ensemble selon l'une quelconque des revendications 1 à 6 caractérisé par le fait que le réseau de télécommunications est un système numérique de communications avec les mobiles (Global System for Mobile Communication).

MA1        MA2

AUMA1

DIMA

AUMA2

DIMA

PA

DIPA

I
H
M

ME

RT

CA1    CA2

AUCA1

AUCA2

FIG. 1

FIG. 2

EP 0 639 020 A1

Office européen des brevets

**RAPPORT DE RECHERCHE EUROPEENNE**

Numero de la demande

EP 94 40 1827

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 292 248 (THE GENERAL ELECTRIC COMPANY,P.L.C.) 23 Novembre 1988 | 1,2,4-9 | H04M11/08 |
| Y | * le document en entier * | 3 | |
| | --- | | |
| X | EP-A-0 446 081 (GEMPLUS CARD INTERNATIONAL) 11 Septembre 1991 * le document en entier * | 1 | |
| | --- | | |
| Y | US-A-5 036 461 (ELLIOTT ET AL.) 30 Juillet 1991 * colonne 4, ligne 35 - ligne 39 * * colonne 5, ligne 1 - colonne 6, ligne 13 * * colonne 7, ligne 38 - colonne 8, ligne 45 * * figures 1-4 * | 3 | |
| | --- | | |
| A | PHILIPS TELECOMMUNICATION & DATA SYSTEMS REVIEW, vol.45, no.2, Juin 1987, EINDHOVEN, NL pages 10 - 26 BRIEND ET AL. 'French PTT MINITEL and LECAM programme' * le document en entier * | 1-9 | **DOMAINES TECHNIQUES RECHERCHES (Int.Cl.6)** H04M |
| | ----- | | |

Le présent rapport a été établi pour toutes les revendications

| Lieu de la recherche | Date d'achèvement de la recherche | Examinateur |
|---|---|---|
| LA HAYE | 17 Octobre 1994 | Goossens, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C08)